(19) Europäisches Patentamt
European Patent Office
Office européen des brevets

(11) EP 4 737 514 A1

(12) **EUROPEAN PATENT APPLICATION**

(43) Date of publication:
**06.05.2026 Bulletin 2026/19**

(21) Application number: **25203725.4**

(22) Date of filing: **22.09.2025**

(51) International Patent Classification (IPC):
***C08L 15/00*** *(2006.01)* ***B60C 1/00*** *(2006.01)*
***C08K 3/04*** *(2006.01)* ***C08K 3/06*** *(2006.01)*
***C08K 5/09*** *(2006.01)* ***C08K 5/092*** *(2006.01)*
***C08K 5/47*** *(2006.01)*

(52) Cooperative Patent Classification (CPC):
(C-Sets available)
**B60C 1/00; B60C 1/0016; C08K 3/04; C08K 3/06; C08K 5/09; C08K 5/092; C08K 5/47; C08L 15/00;**
C08K 2003/2296 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **10.10.2024 JP 2024177928**

(71) Applicant: **Sumitomo Rubber Industries, Ltd.**
**Kobe-shi, Hyogo 651-0072 (JP)**

(72) Inventor: **HOSOYA, Hiromu**
**Kobe-shi, 651-0072 (JP)**

(74) Representative: **Manitz Finsterwald**
**Patent- und Rechtsanwaltspartnerschaft mbB**
**Martin-Greif-Straße 1**
**80336 München (DE)**

(54) **RUBBER COMPOSITION AND TIRE**

(57) Provided are a rubber composition and a tire that excel in heat resistance. The rubber composition contains a rubber component including an epoxidized diene-based rubber, a pyridine-based compound represented by the following formula (1), and a polycarboxylic acid compound:

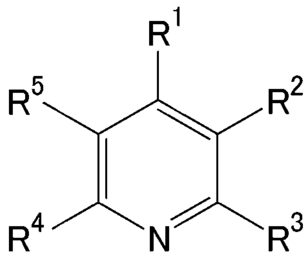

(1)

wherein $R^1$ to $R^5$ bound to a pyridine ring are the same as or different from each other and each represent a hydrogen atom or a monovalent organic group, and $R^1$ to $R^5$ may bind to each other and may form a ring structure.

EP 4 737 514 A1

(52) Cooperative Patent Classification (CPC): (Cont.)

C-Sets
**C08K 3/04, C08K 3/06, C08K 5/09, C08K 5/092,**
**C08K 5/47, C08K 2003/2296, C08L 15/00**

## Description

TECHNICAL FIELD

The present invention relates to rubber compositions and tires.

BACKGROUND ART

Tires are required to have various performances including fuel economy (see Patent Literature 1). Improvement of other properties such as heat resistance is also desired.

CITATION LIST

PATENT LITERATURE

Patent Literature 1: JP 2019-65240 A

SUMMARY OF INVENTION

TECHNICAL PROBLEM

The present invention aims to solve the problem and provide a resin composition and a tire that excel in heat resistance.

SOLUTION TO PROBLEM

The present invention relates to a rubber composition containing:

a rubber component including an epoxidized diene-based rubber,
a pyridine-based compound represented by the following formula (1), and
a polycarboxylic acid compound:

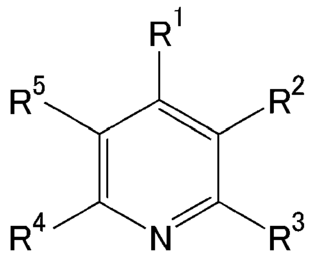

(1)

wherein $R^1$ to $R^5$ bound to a pyridine ring are the same as or different from each other and each represent a hydrogen atom or a monovalent organic group, and $R^1$ to $R^5$ may bind to each other and may form a ring structure.

ADVANTAGEOUS EFFECTS OF INVENTION

The rubber composition of the present invention contains a rubber component including an epoxidized diene-based rubber, a pyridine-based compound represented by the formula (1), and a polycarboxylic acid compound. This rubber composition can improve heat resistance.

DESCRIPTION OF EMBODIMENTS

The rubber composition contains a rubber component including an epoxidized diene-based rubber, a pyridine-based compound represented by the formula (1), and a polycarboxylic acid compound.
The reason for the above-described effects of the rubber composition is not exactly clear, but it is believed as follows.
The combination of a rubber component including an epoxidized diene-based rubber, a pyridine-based

compound represented by the formula (1), and a polycarboxylic acid compound may form ionic bonds and/or hydrogen bonds. In particular, a reaction may be caused by an initial reaction between the epoxy moiety in the rubber and the pyridine-based compound. Since various substituents can be introduced in pyridine-based compounds, the reactivity of the pyridine-based compound can be easily controlled by varying the types of the substituents. Ionic bonds and hydrogen bonds, which are reversible bonds, can be recombined after they are broken by heat. Therefore, the rubber composition containing a combination of the specific components may improve heat resistance.

The rubber composition contains a rubber component.

The rubber component contributes to crosslinking and generally corresponds to a polymer component which has a weight average molecular weight (Mw) of 10000 or more and which is not extractable with acetone. The rubber component is solid under conditions of 1 atmosphere and room temperature (25°C).

The weight average molecular weight of the rubber component is preferably 50000 or more, more preferably 150000 or more, still more preferably 200000 or more, particularly preferably 270000 or more, while it is preferably 2000000 or less, more preferably 1500000 or less, still more preferably 1000000 or less. When the weight average molecular weight is within the range indicated above, the advantageous effects tend to be better achieved.

Herein, the weight average molecular weight (Mw) and the number average molecular weight (Mn) can be determined by gel permeation chromatography (GPC) (GPC-8000 series available from Tosoh Corporation, detector: differential refractometer, column: TSKgel SuperMultipore HZ-M available from Tosoh Corporation) and the determined values are calibrated with polystyrene standards.

The rubber component may be either an unmodified rubber or a modified rubber.

The modified rubber may be a rubber having a functional group interactive with fillers such as silica. Examples include a chain end-modified rubber obtained by modifying at least one chain end of a rubber with a compound (modifier) having the above functional group (i.e., a chain end-modified rubber terminated with the functional group); a backbone-modified rubber having the functional group in the backbone; a backbone- and chain end-modified rubber having the functional group in both the backbone and a chain end (e.g., a backbone- and chain end-modified rubber in which the backbone has the functional group and at least one chain end is modified with the modifier); and a chain end-modified rubber into which a hydroxy or epoxy group has been introduced by modification (coupling) with a polyfunctional compound having two or more epoxy groups in the molecule.

Examples of the functional group include an amino group, an amide group, a silyl group, an alkoxysilyl group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, a hydroxyl group, an oxy group, and an epoxy group. These functional groups may be substituted. Preferred among these are amino groups (preferably amino groups whose hydrogen atom is replaced with a C1-C6 alkyl group), alkoxy groups (preferably C1-C6 alkoxy groups), and alkoxysilyl groups (preferably C1-C6 alkoxysilyl groups).

The rubber composition contains an epoxidized diene-based rubber as a rubber component.

Non-limiting examples of the epoxidized diene-based rubber include epoxidized isoprene-based rubbers such as epoxidized natural rubber (ENR) and epoxidized polyisoprene rubber; epoxidized polybutadiene rubber, epoxidized butadiene-acrylonitrile rubber, epoxidized styrene-butadiene rubber, and epoxidized isoprene-butadiene rubber. Each of these epoxidized diene-based rubbers may be used alone, or two or more of these may be used in combination.

Non-limiting examples of the epoxidized diene-based rubber include commercial products such as ENR25 and ENR50 available from Kumpulan Guthrie Berhad and those obtained by epoxidizing diene-based rubbers. Epoxidation of diene-based rubbers may be performed in accordance with epoxidation of natural rubber.

Examples of the method for epoxidizing natural rubber include chlorohydrin process, direct oxidation process, hydrogen peroxide process, alkyl hydroperoxide process, and peracid process (for example, JP H04-26617 B, JP H02-110182 A, and GB 2113692 B). Examples of the peracid process include a process in which natural rubber is reacted with an organic peracid such as peracetic acid or performic acid. Epoxidized natural rubbers with various degree of epoxidation can be prepared by controlling the amount of the organic peracid or the duration of the reaction. Non-limiting examples of the natural rubber to be epoxidized include those usually used in the tire industry, such as SIR20, RSS#3, TSR20, deproteinized natural rubber (DPNR), and highly purified natural rubber.

To better achieve the advantageous effects, the epoxidized diene-based rubber is preferably an epoxidized isoprene-based rubber or an epoxidized polybutadiene rubber, more preferably an epoxidized isoprene-based rubber, still more preferably an epoxidized natural rubber.

The mechanism of the enhancement of the advantageous effects when an epoxidized isoprene-based rubber is used as the epoxidized diene-based rubber is not clear. Presumably, when an epoxidized isoprene-based rubber is used, only the pyridine-based compound can selectively react with the epoxy moiety in the epoxidized isoprene-based rubber. Since an epoxidized isoprene-based rubber has a methyl group at a position adjacent to the epoxy moiety, it cannot easily react with nucleophiles. Therefore, when the pyridine-based compound is used, the epoxidized isoprene-based rubber cannot react with nucleophiles and other reactive reagents, so that only the pyridine-based compound can react with the

epoxidized isoprene-based rubber. Presumably, the heat resistance is thus significantly improved.

The degree of epoxidation of the epoxidized diene-based rubber is preferably 15 mol% or more, more preferably 20 mol% or more, still more preferably 25 mol% or more. The degree of epoxidation is preferably 75 mol% or less, more preferably 60 mol% or less, still more preferably 50 mol% or less. When the degree of epoxidation is within the range indicated above, the advantageous effects tend to be better achieved.

Herein, the degree of epoxidation of the epoxidized diene-based rubber refers to a ratio (mol%) of the number of epoxidized double bonds to the total number of double bonds in the rubber before epoxidation. The degree of epoxidation can be measured with an NMR spectrometer of JNM-ECA series available from JEOL Ltd.

The amount of the epoxidized diene-based rubber based on 100% by mass of the rubber component in the rubber composition is preferably 70% by mass or more, more preferably 80% by mass or more, still more preferably 90% by mass or more, further preferably 95% by mass or more, and may be 100% by mass. When the amount is within the range indicated above, the advantageous effects tend to be better achieved.

The rubber composition may further contain a rubber component that is different from the epoxidized diene-based rubber.

Examples of the rubber component that is different from the epoxidized diene-based rubber include a diene-based rubber that is not epoxidized. Examples of the diene-based rubber that is not epoxidized include an isoprene-based rubber, polybutadiene rubber (BR), styrene-butadiene rubber (SBR), styrene-isoprene-butadiene rubber (SIBR), ethylene-propylene-diene rubber (EPDM), chloroprene rubber (CR), acrylonitrile-butadiene rubber (NBR), and polynorbornene rubber, all of which are not epoxidized. Examples also include non-diene-based rubbers such as a butyl-based rubber, hydrogenated nitrile rubber, ethylene propylene rubber, silicone rubber, chlorinated polyethylene rubber, fluororubber, acrylic rubber, and hydrin rubber. Each of these may be used alone, or two or more of these may be used in combination. These rubber components may be modified or hydrogenated. Extended rubbers extended with oils, resins, liquid rubber components, or the like may be used as well.

To better achieve the advantageous effects, the rubber component preferably includes at least one of an isoprene-based rubber, BR, and SBR which are not epoxidized.

The raw materials (monomers) of synthetic rubbers such as IR, SBR, and BR may be derived from underground resources such as petroleum or natural gas or may be recycled from rubber products such as tires or non-rubber products such as polystyrene. Non-limiting examples of monomers obtained by recycle (recycled monomers) include isoprene derived from recycled materials, butadiene derived from recycled materials, and aromatic vinyls derived from recycled materials. Examples of the butadiene include 1,2-butadiene and 1,3-butadiene. Non-limiting examples of the aromatic vinyls include styrene. Of these, isoprene derived from recycled materials (recycled isoprene), butadiene derived from recycled materials (recycled butadiene), and/or styrene derived from recycled materials (recycled styrene) are/is preferably used as a raw material.

The recycled monomers may be produced by any method. For example, the recycled monomers may be synthesized from naphtha derived from a recycled material that is obtained by decomposing a rubber product such as a tire. The naphtha derived from a recycled material may be produced by any method, for example, by decomposing a rubber product such as a tire at a high temperature and a high pressure, by microwave decomposition, or by mechanical grinding and subsequent extraction.

Further, the raw materials (monomers) of synthetic rubbers such as IR, SBR, and BR may be derived from biomass. Herein, the term "biomass" refers to substances derived from natural resources such as plants. Non-limiting examples of the biomass include agricultural, forestry and marine products, sugar, wood chips, plant residues after collecting useful components, plant-derived ethanol, and biomass naphtha.

Non-limiting examples of biomass-derived monomers (biomass monomers) include biomass-derived butadiene and biomass-derived aromatic vinyls. Examples of the butadiene include 1,2-butadiene and 1,3-bitadiene. Non-limiting examples of the aromatic vinyls include styrene. Biomass monomers may be produced by any method, for example, a method including at least one of biological conversion, chemical conversion, or physical conversion of an animal or a plant. The biological conversion is typically fermentation by microorganisms.

The chemical and/or physical conversion can be caused by, for example, a catalyst, a high temperature, a high pressure, electromagnetic waves, a critical liquid, or a combination of these.

Non-limiting examples of polymers (biomass polymers) synthesized using a biomass monomer component include polybutadiene rubbers synthesized using biomass-derived butadiene and aromatic vinyl-butadiene copolymers synthesized using biomass-derived butadiene and/or biomass-derived aromatic vinyl. Examples of the aromatic vinyl-butadiene copolymers include styrene-butadiene rubber synthesized using biomass-derived butadiene and/or biomass-derived styrene.

Whether the raw material of a polymer is derived from biomass can be judged by the percent Modern Carbon (pMC) measured in accordance with ASTM D6866-10.

The term "pMC" refers to the ratio of the $^{14}C$ content of a sample to the $^{14}C$ content of a modern carbon standard (modern standard reference). This value is used as an index indicative of the biomass ratio of a compound. The following

will describe what this value means.

One mole of carbon atoms (6.02 × $10^{23}$ carbon atoms) includes about 6.02 × $10^{11}$ $^{14}C$ atoms (about one trillionth of the number of normal carbon atoms). $^{14}C$ is called a radioactive isotope and its half-life period is 5730 years and the number thereof regularly decreases. Decay of all the $^{14}C$ atoms requires 226000 years. This means that in the fossil fuels, such as coal, petroleum, and natural gas, which are considered to be left for at least 226000 years after carbon dioxide and the like in the air were taken into and fixed in plants, or the like, all the $^{14}C$ atoms which had been contained in the plants or the like at the beginning of the fixation were decayed. Therefore, in the current 21st century, the fossil fuels, such as coal, petroleum, and natural gas, contain no $^{14}C$ atoms. Thus, chemical materials prepared from such fossil fuel raw materials contain no $^{14}C$ atoms either.

Meanwhile, $^{14}C$ is unceasingly generated by nuclear reaction of cosmic rays in the air, and this generation balances with the $^{14}C$ reduction due to radioactive decay. Thus, in the global atmosphere, the amount of $^{14}C$ is constant. Then, the $^{14}C$ content of materials derived from biomass resources which are circulating in the current environment is about 1 × $10^{-12}$ mol% of the total of C atoms as described above. Therefore, a difference in the values can be used to calculate the biomass ratio of a compound.

The amount of $^{14}C$ is generally determined as follows. $^{13}C$ content ($^{13}C/^{12}C$) and $^{14}C$ content ($^{11}C/^{12}C$) are determined by tandem accelerator-based mass spectrometry. In the determination, the $^{14}C$ content of the natural carbon cycle at 1950 is used as a modern standard reference, that is, a standard $^{14}C$ content. The particular standard substance used is an oxalic acid standard offered by the National Institute of Standards and Technology (NIST), United

States. The specific radioactivity of carbon (intensity of radioactivity of $^{14}C$ per gram of carbon) in the oxalic acid is corrected for carbon isotopic fractionation to a certain value for $^{13}C$, and is then corrected for decay between 1950 AD and the measurement date. This corrected value is taken as the standard $^{14}C$ content (100%). The ratio between this value and the actual measurement value of a sample is defined as pMC.

Thus, a rubber 100% produced from materials derived from biomass is expected to have roughly about 110 pMC because, although there are some differences such as regional differences, currently such a material often fails to exhibit a value of 100 in usual conditions. On the other hand, the measured $^{14}C$ content of chemical substances derived from fossil fuels, such as petroleum, is expected to be about 0 pMC (for example, 0.3 pMC). This value corresponds to a biomass ratio of 0% mentioned above.

Based on the above discussion, materials such as rubber with a high pMC i.e., materials such as rubber with a high biomass ratio can suitably be used in rubber compositions for environmental protection.

Examples of the isoprene-based rubber include natural rubbers (NR), polyisoprene rubbers (IR), refined NR, modified NR, and modified IR. Examples of NR include those commonly used in the rubber industry such as SIR20, RSS#3, and TSR20. Any IR may be used, including those commonly used in the rubber industry such as IR2200. Examples of refined NR include deproteinized natural rubbers (DPNR) and highly purified natural rubbers. Examples of modified NR include hydrogenated natural rubbers (HNR) and grafted natural rubbers. Examples of modified IR include hydrogenated polyisoprene rubbers and grafted polyisoprene rubbers. Each of these may be used alone, or two or more of these may be used in combination.

The polybutadiene rubber (BR) is not limited. Examples include high-cis BR having a high cis content, BR containing syndiotactic polybutadiene crystals, and BR synthesized using rare earth catalysts (rare earth-catalyzed BR). Each of these may be used alone, or two or more of these may be used in combination. In particular, BR preferably includes high-cis BR having a cis content of 90% by mass or higher. The cis content is more preferably 95% by mass or higher. Here, the cis content can be measured by infrared absorption spectrometry.

Herein, when one type of BR is used, the cis content of the BR refers to the cis content of the one BR, while when multiple types of BR are used, it refers to the average cis content.

The average cis content of BR can be calculated using the expression: {Σ(amount of each BR × cis content of the each BR)}/amount of total BR. For example, when 100% by mass of rubber components include 20% by mass of BR having a cis content of 90% by mass and 10% by mass of BR having a cis content of 40% by mass, the average cis content of the BR is 73.3% by mass (= (20 × 90 + 10 × 40)/(20 + 10)).

The BR may be either an unmodified BR or a modified BR. Examples of the modified BR include those into which the functional groups listed for the modified rubbers have been introduced. The BR may also be a hydrogenated polybutadiene polymer (hydrogenated BR).

Examples of usable BR include products available from UBE Corporation, JSR Corporation, Asahi Kasei Corp., Zeon Corporation, and other manufacturers.

The styrene-butadiene rubber (SBR) is not limited. Examples of SBR include emulsion-polymerized styrene-butadiene rubbers (E-SBR) and solution-polymerized styrene-butadiene rubbers (S-SBR). Each of these may be used alone, or two or more of these may be used in combination.

The styrene content of the SBR is preferably 5% by mass or more, more preferably 20% by mass or more, still more preferably 24% by mass or more. The styrene content is preferably 60% by mass or less, more preferably 40% by mass or less, still more preferably 35% by mass or less. When the styrene content is within the range indicated above, the

advantageous effects tend to be better achieved.

Herein, regarding the styrene content of the SBR, the styrene content of each SBR can be measured by $^{1}$H-NMR analysis.

When one type of SBR is used, the styrene content of the SBR refers to the styrene content of the one SBR, while when multiple types of SBR are used, it refers to the average styrene content.

The average styrene content of SBR can be calculated using the expression: {Σ(amount of each SBR × styrene content of the each SBR)}/amount of total SBR. For example, when 100% by mass of rubber components include 85% by mass of SBR having a styrene content of 40% by mass and 5% by mass of SBR having a styrene content of 25% by mass, the average styrene content of the SBR is 39.2% by mass (= (85 × 40 + 5 × 25)/(85 + 5)).

The vinyl content of the SBR is preferably 3% by mass or more, more preferably 10% by mass or more, still more preferably 17% by mass or more. The vinyl content is preferably 50% by mass or less, more preferably 40% by mass or less, still more preferably 30% by mass or less. When the vinyl content is within the range indicated above, the advantageous effects tend to be better achieved.

Herein, regarding the vinyl content of the SBR, the vinyl content (1,2-butadiene unit content) of each SBR can be measured by infrared absorption spectrometry.

The vinyl content (1,2-butadiene unit content) of the SBR refers to the percentage (unit: % by mass) of vinyl bonds based on the total mass of the butadiene moieties in the SBR taken as 100. The sum of the vinyl content (% by mass), the cis content (% by mass), and the trans content (% by mass) equals 100 (% by mass). When one type of SBR is used, the vinyl content of the SBR refers to the vinyl content of the one SBR, while when multiple types of SBR are used, it refers to the average vinyl content.

The average vinyl content of SBR can be calculated using the expression: Σ{amount of each SBR × (100 (% by mass) - styrene content (% by mass) of the each SBR) × vinyl content (% by mass) of the each SBR}/Σ{amount of each SBR × (100 (% by mass) - styrene content (% by mass) of the each SBR)}. For example, when 100 parts by mass of rubber components include 75 parts by mass of SBR having a styrene content of 40% by mass and a vinyl content of 30% by mass, 15 parts by mass of SBR having a styrene content of 25% by mass and a vinyl content of 20% by mass, and the remaining 10 parts by mass of a rubber component other than SBR, the average vinyl content of the SBR is 28% by mass (= {75 × (100 (% by mass) - 40 (% by mass)) × 30 (% by mass) + 15 × (100 (% by mass) - 25 (% by mass)) × 20 (% by mass)}/{75 × (100 (% by mass) - 40 (% by mass)) + 15 × (100 (% by mass) - 25 (% by mass))}.

The SBR may be either an unmodified SBR or a modified SBR. Examples of the modified SBR include those into which the functional groups listed for the modified rubbers have been introduced. The SBR may also be a hydrogenated styrene-butadiene copolymer (hydrogenated SBR).

The SBR may be a SBR product manufactured or sold by Sumitomo Chemical Co., Ltd., JSR Corporation, Asahi Kasei Corporation, Zeon Corporation, or other manufacturers or may be SBR synthesized by a known method.

The amount of an isoprene-based rubber that is not epoxidized, if present, in the rubber composition based on 100% by mass of the rubber component is preferably 5% by mass or more, more preferably 10% by mass or more, still more preferably 15% by mass or more, while it is preferably 80% by mass or less, more preferably 70% by mass or less, still more preferably 60% by mass or less. When the amount is within the range indicated above, the advantageous effects tend to be better achieved.

The amount of BR that is not epoxidized, if present, in the rubber composition based on 100% by mass of the rubber component is preferably 5% by mass or more, more preferably 10% by mass or more, still more preferably 15% by mass or more, while it is preferably 80% by mass or less, more preferably 70% by mass or less, still more preferably 60% by mass or less. When the amount is within the range indicated above, the advantageous effects tend to be better achieved.

The amount of SBR that is not epoxidized, if present, in the rubber composition based on 100% by mass of the rubber component is preferably 5% by mass or more, more preferably 10% by mass or more, still more preferably 15% by mass or more, while it is preferably 80% by mass or less, more preferably 70% by mass or less, still more preferably 60% by mass or less. When the amount is within the range indicated above, the advantageous effects tend to be better achieved.

The rubber composition contains a pyridine-based compound represented by the following formula (1). The pyridine-based compound may be any compound that is represented by the following formula (1) and can exhibit the advantageous effects. Various types of the pyridine-based compound are usable.

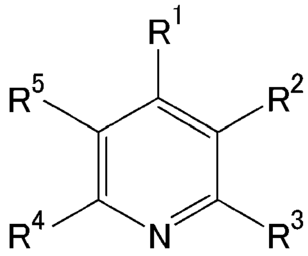

(1)

In the formula (1), $R^1$ to $R^5$ bound to a pyridine ring are the same as or different from each other and each represent a hydrogen atom or a monovalent organic group, and $R^1$ to $R^5$ may bind to each other and may form a ring structure.

In the case where any of $R^1$ to $R^5$ in the formula (1) is a monovalent organic group, examples of the monovalent organic group include aryl groups, heterocyclic groups, alkyl groups (preferably C1-C10 alkyl groups, more preferably C1-C5 alkyl groups), alkenyl groups (preferably C2-C10 alkenyl groups, more preferably C2-C5 alkenyl groups), alkynyl groups (preferably C2-C10 alkynyl groups, more preferably C2-C5 alkynyl groups), alkoxy groups (preferably C1-C10 alkoxy groups, more preferably C1-C5 alkoxy groups), aryloxy groups, arylalkoxy groups, silyl groups, hydroxy groups, amino groups, halogen atoms, carboxyl groups, thiol groups, epoxy groups, acyl groups, oligoaryl groups, monovalent oligoheterocyclic groups, alkylthio groups, arylthio groups, arylalkyl groups, arylalkoxy groups, arylalkylthio groups, azo groups, stannyl groups, phosphino groups, silyloxy groups, aryloxycarbonyl groups, alkoxycarbonyl groups, carbamoyl groups, arylcarbonyl groups, alkylcarbonyl groups, arylsulfonyl groups, alkylsulfonyl groups, arylsulfinyl groups, alkylsulfinyl groups, formyl groups, cyano groups, nitro groups, arylsulfonyloxy groups, alkylsulfonyloxy groups, alkylsulfonate groups, arylsulfonate groups, arylalkylsulfonate groups, boryl groups, sulfonium methyl groups, phosphonium methyl groups, methyl phosphonate groups, aryl sulfonate groups, aldehyde groups, and acetonitrile groups, all of which may be substituted. In the case of a substituted monovalent organic group as any of $R^1$ to $R^5$, it may have one substituent or two or more substituents.

In the case of a substituted monovalent organic group as any of $R^1$ to $R^5$, examples of the substituent include halogen atoms such as a fluorine atom, a chlorine atom, a bromine atom, and an iodine atom; haloalkyl groups such as a chloromethyl group, a bromomethyl group, an iodomethyl group, a fluoromethyl group, a difluoromethyl group, and a trifluoromethyl group; C1-C20 linear or branched alkyl groups such as a methyl group, an ethyl group, a propyl group, an isopropyl group, a butyl group, an isobutyl group, a sec-butyl group, and a tert-butyl group; C5-C7 cyclic alkyl groups such as a cyclopentyl group, a cyclohexyl group, and a cycloheptyl group; C1-C20 linear or branched alkoxy groups such as a methoxy group, an ethoxy group, a propoxy group, an isopropoxy group, a butoxy group, an isobutoxy group, a tert-butoxy group, a pentyloxy group, a hexyloxy group, a heptyloxy group, and an octyloxy group; hydroxy groups; thiol groups; nitro groups; cyano groups; amino groups; azo groups; acyl groups; C2-C20 alkenyl groups such as a vinyl group, a 1-propenyl group, an allyl group, a butenyl group, and a styryl group; C2-C20 alkynyl groups such as an ethynyl group, a 1-propynyl group, a propargyl group, and a phenylacetynyl group; alkenyloxy groups such as a vinyloxy group and an allyloxy group; alkynyloxy groups such as an ethynyloxy group and a phenylacetyloxy group; and aryloxy groups such as a phenoxy group, a naphthoxy group, a biphenyloxy group, and a pyrenyloxy group. These groups may bind to each other at any position to form a ring.

In view of the basicity of the pyridine-based compound represented by the formula (1), preferred among the monovalent organic groups is an electron-donating group such as an aryl group, a heterocyclic group, an alkyl group, an alkoxy group, an aryloxy group, a hydroxy group, a silyl group, a boryl group, an amino group, a thiol group, an alkylthio group, or an arylthio group, which may be substituted, with an amino group being particularly preferred. When the pyridine-based compound has high basicity, it can form stronger ionic bonds and/or hydrogen bonds with the epoxidized diene-based rubber and the carboxylic acid compound used together, so that the advantageous effects tend to be better achieved.

Here, the term "electron-donating group" in the organic electronic theory refers to an atomic group that donates electrons through inductive effects or resonance effects to an atomic group to which the electron-donating group binds, and examples include an atomic group with a negative Hammett substituent constant ($\sigma$p (para)). The Hammett substituent constant ($\sigma$p (para)) can be cited from the revised 5th edition of Chemistry Handbook (Kagaku Binran) (Part II, p. 380; edited by the Chemical Society of Japan, Maruzen Co., Ltd.).

Specifically, in the pyridine-based compound represented by the formula (1), at least one, preferably one or two, of $R^1$ to $R^5$ bound to a pyridine ring in the formula (1) is the electron-donating group, particularly preferably an amino group.

Examples of the amino group include a primary amino group, a secondary amino group, and a tertiary amino group.

A primary amino group refers to a monovalent substituent represented by $-NH_2$. A secondary amino group refers to a monovalent substituent represented by $-NHR^{11}$ wherein $R^{11}$ represents an optionally substituted hydrocarbon group.

A tertiary amino group refers to a monovalent substituent represented by $-NR^{12}R^{13}$ wherein $R^{12}$ and $R^{13}$ are the same as or different from each other and each represent an optionally substituted hydrocarbon group.

The mechanism of the enhancement of the advantageous effects when at least one of $R^1$ to $R^5$ bound to a pyridine ring in the formula (1) is an amino group is not clear. Presumably, the pyridine-based compound having an amino group has high basicity and can easily react with the epoxy moiety. Presumably, the heat resistance is thus significantly improved.

Specific suitable examples of the pyridine-based compound represented by the formula (1) include pyridine, 2-methylpyridine, 3-methylpyridine, 4-methylpyridine, 3-isobutylpyridine, 2-n-hexylpyridine, 3-n-hexylpyridine, 3,5-dimethylpyridine, 2-benzylpyridine, 3-phenylpyridine, 2,6-diphenylpyridine, 2-(3-phenylpropyl)pyridine, 2-methoxypyridine, 3,5-dimethoxypyridine, 2-aminopyridine, 3-aminopyridine, 4-aminopyridine, 4-(methylamino)pyridine, 2,3-diaminopyridine, 2,6-diaminopyridine, 3,4-diaminopyridine, 4-dimethylaminopyridine, 2-amino-3-methylpyridine, 2-amino-4-methylpyridine, 2-amino-4-ethylpyridine, 2-benzylaminopyridine, 5-amino-2-methoxypyridine, 2-amino-5-methoxypyridine, 2-amino-3-methoxypyridine, 2-amino-4-methoxypyridine, 2-amino-6-methoxypyridine, 2-amino-3-ethoxypyridine, pyridine-2-thiol, pyridine-2,4-diol, 4-pyrrolidinopyridine, 2-hydroxypyridine, 3-hydroxypyridine, and 3,4-dihydroxypyridine. Each of these may be used alone, or two or more of these may be used in combination. In view of the basicity of the pyridine-based compound represented by the formula (1), preferred among these is 4-dimethylaminopyridine or 2,6-diaminopyridine, with 2,6-diaminopyridine being more preferred.

The pyridine-based compound represented by the formula (1) may be, for example, a product available from Tokyo Chemical Industry Co., Ltd.

The amount of the pyridine-based compound represented by the formula (1) per 100 parts by mass of the rubber component in the rubber composition is preferably 0.1 parts by mass or more, more preferably 0.3 parts by mass or more, still more preferably 0.5 parts by mass or more, further preferably 1.0 parts by mass or more, while it is preferably 10.0 parts by mass or less, more preferably 7.0 parts by mass or less, still more preferably 5.0 parts by mass or less, further preferably 3.0 parts by mass or less. When the amount is within the range indicated above, the advantageous effects tend to be better achieved. The advantageous effects can be actually achieved when the amount is 10 parts by mass or less. In view of the crosslinking density, the amount per 100 parts by mass of the rubber component is preferably 1.0 parts by mass or less, more preferably 0.5 parts by mass or less, while it is preferably 0.05 parts by mass or more, more preferably 0.1 parts by mass or more.

The rubber composition contains a polycarboxylic acid compound.

Herein, the term "polycarboxylic acid compound" refers to a compound having two or more carboxyl groups.

The polycarboxylic acid compound may be any polycarboxylic acid compound that can exhibit the advantageous effects. Examples include divalent or higher aliphatic carboxylic acid compounds, divalent or higher alicyclic carboxylic acid compounds, and divalent or higher aromatic carboxylic acid compounds. The polycarboxylic acid compound may have a substituent. Examples of the substituent include a hydroxy group, an alkoxy group, and an amino group. The number of the substituent(s) may be one or two or more. The number of types of the substituent may be one or two or more.

Examples of the polycarboxylic acid compound include divalent carboxylic acid compounds such as maleic acid, fumaric acid, phthalic acid, malic acid, tartaric acid, and suberic acid; trivalent carboxylic acid compounds such as citric acid; tetravalent carboxylic acid compounds such as pyromellitic acid; and hexavalent carboxylic acid compounds such as mellitic acid. One of these polycarboxylic acid compounds may be used alone, or two or more of these may be used in combination.

To better achieve the advantageous effects, the polycarboxylic acid compound is preferably a divalent carboxylic acid compound. The divalent carboxylic acid compound is suitably a compound represented the following formula (I). This compound has a carboxyl group at each end and therefore can form a strong network between polymers.

$$HOOC\text{-}A\text{-}COOH \qquad (I)$$

In the formula (I), A represents an optionally substituted divalent C1-C10 hydrocarbon group.

The hydrocarbon group as A in the formula (I) may be any of an aliphatic hydrocarbon group, an alicyclic hydrocarbon group, and an aromatic hydrocarbon group. The aliphatic hydrocarbon group or the alicyclic hydrocarbon group may be saturated or unsaturated. In the alicyclic hydrocarbon group or the aromatic hydrocarbon group, a hydrogen atom may be replaced by an alkyl group. Moreover, the aliphatic hydrocarbon group may be linear or branched.

To better achieve the advantageous effects, the carbon number of the hydrocarbon group as A in the formula (I) is preferably 2 or more, more preferably 5 or more, still more preferably 7 or more, further preferably 10 or more. The carbon number is preferably 20 or less, more preferably 17 or less, still more preferably 15 or less, further preferably 12 or less. In view of improving crosslinking formation rate, the carbon number is preferably 10 or less, more preferably 7 or less, still more preferably 5 or less, while it is preferably 1 or more.

Specific examples of the hydrocarbon group as A in the formula (I) include an alkylene group, an alkenylene group, a cycloalkylene group, and an arylene group. An alkylene group is preferred among these. Examples of the alkylene

group include linear alkylene groups such as an ethylene group, an n-propylene group, an n-butylene group, an n-hexylene group, and an n-dodecylene group, and branched alkylene groups such as an isopropylene group, an isobutylene group, and a 2-methylpropylene group. To better achieve the advantageous effects, a linear alkylene group is preferred, an ethylene group, an n-propylene group, an n-hexylene group, or an n-dodecylene group is more preferred, and an n-dodecylene group is still more preferred among these.

The hydrocarbon group as A in the formula (I) may have a substituent. Examples of the substituent include a hydroxy group, an alkoxy group, and an amino group. The number of the substituent may be one or two or more. The number of types of the substituent may be one or two or more.

The amount of the polycarboxylic acid compound per 100 parts by mass of the rubber component in the rubber composition is preferably 0.1 parts by mass or more, more preferably 0.3 parts by mass or more, still more preferably 0.5 parts by mass or more, further preferably 1.0 parts by mass or more, further preferably 2.0 parts by mass or more, while it is preferably 10.0 parts by mass or less, more preferably 7.0 parts by mass or less, still more preferably 5.0 parts by mass or less, further preferably 3.0 parts by mass or less. When the amount is within the range indicated above, the advantageous effects tend to be better achieved. The advantageous effects can be actually achieved when the amount is 10 parts by mass or less. In view of the crosslinking density, the amount per 100 parts by mass of the rubber component is preferably 2.0 parts by mass or less, more preferably 1.0 parts by mass or less, still more preferably 0.5 parts by mass or less, while it is preferably 0.05 parts by mass or more, more preferably 0.1 parts by mass or more.

The rubber composition preferably contains a filler.

The filler is not limited and may be a known material in the rubber field. Examples include inorganic fillers such as carbon black, silica, calcium carbonate, talc, alumina, clay, aluminum hydroxide, aluminum oxide, and mica; bio char, and hard-to-disperse fillers. To better achieve the advantageous effect, carbon black or silica is preferably contained, and carbon black is particularly preferably contained among these.

The mechanism of the enhancement of the advantageous effects when carbon black is contained as a filler is not clear. The presence of carbon black may enhance the heat conductivity of the rubber, so that the heat generated in the rubber can be effectively dissipated. This can suppress the occurrence of localized high temperatures to delay the progression of thermal decomposition. Presumably, the heat resistance is thus significantly improved.

Non-limiting examples of the carbon black include N134, N110, N220, N234, N219, N339, N330, N326, N351, N550, and N762. The raw material of the carbon black may be a biomass material such as lignin or a plant oil or may be a pyrolysis oil obtained by pyrolyzing waste tires. The carbon black may be produced through combustion, for example, by the furnace method, through hydrothermal carbonization (HTC), or through thermal decomposition of methane, for example, by thermal black method. Usable commercial products are available from Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon, and other manufacturers. Each of these carbon black may be used alone, or two or more of these may be used in combination.

The nitrogen adsorption specific surface area ($N_2SA$) of the carbon black is preferably 5 $m^2/g$ or more, more preferably 20 $m^2/g$ or more, still more preferably 40 $m^2/g$ or more, further preferably 75 $m^2/g$ or more. The $N_2SA$ is preferably 200 $m^2/g$ or less, more preferably 130 $m^2/g$ or less, still more preferably 120 $m^2/g$ or less. When the $N_2SA$ is within the range indicated above, the advantageous effects tend to be better achieved. In view of processability, the $N_2SA$ is preferably 75 $m^2/g$ or less, more preferably 60 $m^2/g$ or less, still more preferably 40 $m^2/g$ or less, while it is preferably 3 $m^2/g$ or more, more preferably 10 $m^2/g$ or more.

The nitrogen adsorption specific surface area of the carbon black can be determined in accordance with JIS K 6217-2:2001.

Non-limiting examples of silica usable in the rubber composition include silica usually used in the tire industry, such as silica (anhydrous silica) prepared by a dry process and silica (hydrous silica) prepared by a wet process. The raw material of the silica is not limited and may be a raw material derived from minerals such as quartz or a raw material derived from a biological resource such as husks (for example, silica made from a biomass material such as husks as a raw material). The silica may be silica recycled from a silica-containing product. Preferred among these are hydrous silica prepared by a wet process because it has a large number of silanol groups. The silica may be used alone or two or more types of the silica may be used in combination.

The silica made from a biomass material can be obtained by, for example, extracting a silicate using a sodium hydroxide solution from husk ash that is obtained by burning husks, subsequently, as in production of conventional wet silica, reacting the silicate with sulfuric acid to precipitate silicon dioxide, and then subjecting the precipitated silicon dioxide to filtration, water washing, drying, and grinding.

The silica recycled from a silica-containing product may be silica recovered from a silica-containing product including an electronic component such as a semiconductor, a tire, a drying agent, or a filtering material such as diatomite. Non-limiting examples of the recovering method include thermal decomposition and decomposition by electromagnetic waves. Preferred among these is silica recovered from an electronic component such as a semiconductor or a tire.

Since crystalline silica does not dissolve in water, silicic acid as a component thereof cannot be utilized.

Crystallization of silica in husk ash can be suppressed by controlling the burning temperature and burning time (see JP 2009-2594 A, Akita Prefectural University Web Journal B/2019, vol.6, pp. 216-222, for example).

Usable amorphous silica extracted from husks may be commercially available from Wilmar and other manufacturers.

The nitrogen adsorption specific surface area ($N_2SA$) of the silica is preferably 50 $m^2/g$ or more, more preferably 80 $m^2/g$ or more, still more preferably 100 $m^2/g$ or more. The upper limit of the $N_2SA$ of the silica is not limited, and it is preferably 350 $m^2/g$ or less, more preferably 300 $m^2/g$ or less, still more preferably 250 $m^2/g$ or less. When the $N_2SA$ is within the range indicated above, the advantageous effects tend to be better achieved.

The $N_2SA$ of the silica is measured by the BET method in accordance with ASTM D3037-93.

Examples of hard-to-disperse fillers include microfibrillated plant fibers, short fibrous celluloses, and gel compounds. Microfibrillated plant fibers are preferred among these.

To obtain good reinforcement, cellulose microfibrils are preferred among the microfibrillated plant fibers. Any cellulose microfibril derived from natural products may be used. Examples include those derived from resource biomass such as fruits, grains, and root vegetables; wood, bamboo, hemp, jute, and kenaf, and pulp, paper, or cloth produced therefrom; waste biomass such as agricultural waste, food waste, and sewage sludge; unused biomass such as rice straw, wheat straw, and thinnings; and celluloses produced by ascidians, acetic acid bacteria, or other organisms. Each of these microfibrillated plant fibers may be used alone, or two or more of these may be used in combination.

Herein, the term "cellulose microfibrils" typically refers to cellulose fibers having an average fiber diameter of not more than 10 $\mu$m, more typically cellulose fibers having a microstructure with an average fiber diameter of not more than 500 nm formed by aggregation of cellulose molecules. For example, typical cellulose microfibrils may be formed as aggregates of cellulose fibers having an average fiber diameter indicated above.

The amount of the filler (total amount of fillers such as carbon black and silica) per 100 parts by mass of the rubber component in the rubber composition is preferably 5 parts by mass or more, more preferably 10 parts by mass or more, still more preferably 25 parts by mass or more, further preferably 40 parts by mass or more, further preferably 50 parts by mass or more, while it is preferably 200 parts by mass or less, more preferably 150 parts by mass or less, still more preferably 120 parts by mass or less, further preferably 100 parts by mass or less, further preferably 80 parts by mass or less. When the amount is within the range indicated above, the advantageous effects tend to be better achieved. In view of processability, the amount per 100 parts by mass of the rubber component is preferably 50 parts by mass or less, more preferably 40 parts by mass or less, still more preferably 25 parts by mass or less, further preferably 10 parts by mass or less, further preferably 5 parts by mass or less, while it is preferably 1 part by mass or more, more preferably 3 parts by mass or more.

The mechanism of the enhancement of the advantageous effects when the amount of the filler per 100 parts by mass of the rubber component in the rubber composition is 50 parts by mass or more is not clear. The presence of a predetermined amount or more of the filler may enhance the heat conductivity of the rubber, so that the heat generated in the rubber can be effectively dissipated. This can suppress the occurrence of localized high temperatures to delay the progression of thermal decomposition. Presumably, the heat resistance is thus significantly improved.

The amount of carbon black, if present, in the rubber composition per 100 parts by mass of the rubber component is preferably 5 parts by mass or more, more preferably 10 parts by mass or more, still more preferably 25 parts by mass or more, further preferably 40 parts by mass or more, further preferably 50 parts by mass or more, while it is preferably 200 parts by mass or less, more preferably 150 parts by mass or less, still more preferably 120 parts by mass or less, further preferably 100 parts by mass or less, further preferably 80 parts by mass or less. When the amount is within the range indicated above, the advantageous effects tend to be better achieved. In view of processability, the amount per 100 parts by mass of the rubber component is preferably 50 parts by mass or less, more preferably 40 parts by mass or less, still more preferably 25 parts by mass or less, further preferably 10 parts by mass or less, further preferably 5 parts by mass or less, while it is preferably 1 part by mass or more, more preferably 3 parts by mass or more.

The amount of silica, if present, in the rubber composition per 100 parts by mass of the rubber component is preferably 5 parts by mass or more, more preferably 25 parts by mass or more, still more preferably 30 parts by mass or more, while it is preferably 150 parts by mass or less, more preferably 100 parts by mass or less, still more preferably 70 parts by mass or less. When the amount is within the range indicated above, the advantageous effects tend to be better achieved.

The rubber composition which contains silica preferably further contains a silane coupling agent.

Any silane coupling agent may be used, and those known in the rubber field are usable. Examples include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyltetrasulfide, 2-triethoxysilylethyl-N,N-dimethylthiocarbamoyltetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from

Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Usable commercial products are available from Evonik, Momentive, Shin-Etsu Silicone, Tokyo Chemical Industry Co., Ltd., AZmax. Co., Dow Corning Toray Co., Ltd., and other manufacturers. Each of these may be used alone, or two or more of these may be used in combination.

The amount of the silane coupling agent per 100 parts by mass of silica in the rubber composition is preferably 0.1 parts by mass or more, more preferably 3 parts by mass or more, still more preferably 5 parts by mass or more, particularly preferably 7 parts by mass or more. The upper limit of the amount is preferably 50 parts by mass or less, more preferably 20 parts by mass or less, still more preferably 15 parts by mass or less, particularly preferably 10 parts by mass or less. When the amount is within the range indicated above, the advantageous effects tend to be better achieved.

The rubber composition may contain a plasticizer.

Herein, the term "plasticizer" refers to a material that imparts plasticity to rubber components and conceptually includes both plasticizers that are liquid under conditions of 1 atmosphere and room temperature (25°C) and plasticizers that are solid under conditions of 1 atmosphere and room temperature (25°C).

Examples of the plasticizer include resin components, oils, liquid polymers, and ester plasticizers. These plasticizers may be derived from mineral resources such as petroleum or natural gas, biomass, or naphtha recycled from rubber products or non-rubber products. Usable plasticizers also include low molecular weight hydrocarbon components obtained by subjecting used tires or products containing various components to pyrolysis and extraction. Each of these plasticizers may be used alone, or two or more of these may be used in combination.

Specific examples of the plasticizer include oils, liquid polymers, and resins. Each of these may be used alone, or two or more of these may be used in combination.

Examples of the oils include mineral oils, plant oils, and animal oils. In view of life cycle assessment, oils obtained by purifying waste oils used in rubber mixing machines or engines or waste cooking oils used in cooking establishments may be used.

Herein, mineral oils refer to oils derived from mineral resources such as petroleum or natural gas. Examples of the mineral oils include paraffinic oils (mineral oils), naphthenic oils, and aromatic oils. Specific examples of the mineral oils include mild extract solvates (MES), distillate aromatic extracts (DAE), treated distillate aromatic extracts (TDAE), treated residual aromatic extracts (TRAE), and residual aromatic extracts (RAE). For environmental protection, oils with a low polycyclic aromatic compound (PCA) content may be used. Examples of the oils with a low PCA content include MES, TDAE, and heavy naphthenic oils.

Herein, examples of the plant oils include linseed oil, rapeseed oil, safflower oil, soybean oil, corn oil, cotton seed oil, rice oil, tall oil, sesame oil, perilla oil, castor oil, tung oil, pine oil, pine tar oil, sunflower oil, coconut oil, palm oil, palm kernel oil, olive oil, camellia oil, jojoba oil, macadamia nut oil, peanut oil, grape seed oil, and Japan tallow. Examples of the plant oils also include refined oils (e.g., salad oil) produced by refining the above-mentioned oils, esterified oils produced by esterifying the above-mentioned oils, hardened oils produced by hydrogenation of the above-mentioned oils, thermally polymerized oils produced by thermal polymerization of the above-mentioned oils, oxidized polymerized oils produced by oxidizing the above-mentioned oils, and waste edible oils recovered from used edible oils or the like. The plant oils may be liquid or solid under conditions of 1 atmosphere and room temperature (25°C). Each of these plant oils may be used alone, or two or more of these may be used in combination.

The plant oils according to the present embodiments each preferably contain acylglycerol and more preferably contain triacylglycerol. Herein, the term "acylglycerol" refers to a compound in which hydroxy groups of glycerol are ester-bonded to a fatty acid. Non-limiting examples of the acylglycerol include 1-monoacylglycerol, 2-monoacylglycerol, 1,2-diacylglycerol, 1,3-diacylglycerol, and triacylglycerol. Moreover, the acylglycerol may be a monomer, a dimer, or a trimer or higher multimer. A dimer or higher multimer acylglycerol may be obtained by thermal polymerization or oxidation polymerization, for example. The acylglycerol may be liquid or solid under conditions of 1 atmosphere and room temperature (25°C).

Whether a rubber composition contains the acylglycerol may be examined by any method such as $^{1}$H-NMR analysis. For example, a rubber composition containing triacylglycerol is immersed in deuterium chloroform under conditions of 1 atmosphere and room temperature (25°C) for 24 hours. After removing the rubber composition, the $^{1}$H-NMR is measured at room temperature. Signals observed at around 5.26 ppm, around 4.28 ppm, and around 4.15 ppm, each relative to the signal of tetramethylsilane (TMS) taken as 0.00 ppm, are assumed as the signals of hydrogen atoms bound to carbon atoms adjacent to the oxygen atoms of ester groups. The term "around" in this paragraph refers to a range of $\pm$ 0.10 ppm.

The fatty acid is not limited and may be an unsaturated fatty acid or a saturated fatty acid. Examples of the unsaturated fatty acid include monounsaturated fatty acids such as oleic acid and polyunsaturated fatty acids such as linoleic acid and linolenic acid. Examples of the saturated fatty acid include butyric acid and lauric acid.

Of these fatty acids, fatty acids with few double bonds, specifically saturated fatty acids or monounsaturated fatty acids are desirable, and oleic acid is preferred. Examples of usable plant oils containing such fatty acids include plant oils containing saturated fatty acids or monounsaturated fatty acids and plant oils modified by transesterification or the like. Plants may be improved by breed improvement, genetic modification, genome editing, or other techniques to produce plant oils containing such fatty acids.

Usable commercial oils may be available from Idemitsu Kosan Co., Ltd., Sankyo Yuka Kogyo K.K., ENEOS Corporation, Olisoy, H&R, Hokoku Corporation, Fuji Kosan Co., Ltd., Nisshin Oillio Group, and other manufacturers.

Examples of the liquid polymers include liquid diene-based polymers (liquid rubbers) and liquid farnesene polymers, all of which are liquid under conditions of 1 atmosphere and 25°C. Examples of liquid rubbers include liquid styrene-butadiene copolymers (liquid SBR), liquid butadiene polymers (liquid BR), liquid isoprene polymers (liquid IR), liquid styrene-isoprene copolymers (liquid SIR), liquid styrene-butadiene-styrene block copolymers (liquid SBS block polymers), and liquid styrene-isoprene-styrene block copolymers (liquid SIS block polymers). A chain end or the backbone of these may be modified with a polar group. Hydrogenated products of these are also usable.

The weight average molecular weight (Mw) of the liquid diene-based polymers is preferably $1.0 \times 10^3$ to $5.0 \times 10^4$, more preferably $3.0 \times 10^3$ to $1.5 \times 10^4$ as measured by gel permeation chromatography (GPC) and calibrated with polystyrene standards. The lower limit of the Mw of the liquid diene-based polymers may be 4500 or 8500, and the upper limit may be 4500 or 8500.

Herein, the Mw of the liquid diene-based polymers is measured by gel permeation chromatography (GPC) and calibrated with polystyrene standards.

Usable liquid diene-based polymers may be commercially available from Sartomer, Kraray, and other manufacturers.

The resins may be resins that are usually used as additives for tires. They may be either liquid or solid under conditions of 1 atmosphere and room temperature (25°C). Examples include aromatic vinyl polymers, coumarone-indene resins, coumarone resins, indene resins, phenol resins, rosin resins, petroleum resins, terpene resins, and acrylic resins. The resins may be those hydrogenated (hydrogenated resins). Each of these may be used alone, or two or more of these may be used in combination. The resins themselves may be copolymers of different monomers. Of these, aromatic vinyl polymers, petroleum resins, terpene resins, and hydrogenated products of these polymers and resins are desirable.

The softening point of the resins that are solid under conditions of 1 atmosphere and room temperature (25°C), if used, is preferably 50°C or higher, more preferably 55°C or higher, still more preferably 60°C or higher, particularly preferably 85°C or higher, while it is preferably 160°C or lower, more preferably 150°C or lower, still more preferably 140°C or lower, particularly preferably 100°C or lower. When the softening point is within the range indicated above, the advantageous effects tend to be better achieved.

The softening point of the resins that are liquid under conditions of 1 atmosphere and room temperature (25°C) is preferably 20°C or lower, preferably 10°C or lower, preferably 0°C or lower.

Hydrogenated resins desirably have a softening point within the range indicated above.

The softening point of the resins is determined in accordance with JIS K 6220-1:2001 using a ring and ball softening point measuring apparatus. The temperature at which the ball drops down is defined as the softening point.

The aromatic vinyl polymers refer to polymers containing aromatic vinyl monomers as structural units. Examples include resins produced by polymerization of α-methylstyrene and/or styrene. Specific examples include styrene homopolymers (styrene resins), α-methylstyrene homopolymers (α-methylstyrene resins), copolymers of α-methylstyrene and styrene, and copolymers of styrene and other monomers.

The coumarone-indene resins refer to resins containing coumarone and indene as the main monomer components forming the skeleton (backbone) of the resins. Examples of monomer components which may be contained in the skeleton in addition to coumarone and indene include styrene, α-methylstyrene, methylindene, and vinyltoluene.

The coumarone resins refer to resins containing coumarone as the main monomer component forming the skeleton (backbone) of the resins.

The indene resins refer to resins containing indene as the main monomer component forming the skeleton (backbone) of the resins.

Examples of the phenol resins include known polymers produced by reacting phenol with an aldehyde such as formaldehyde, acetaldehyde, or furfural in the presence of an acid or alkali catalyst. Preferred among these are those produced by reacting them in the presence of an acid catalyst, such as novolac phenol resins.

Examples of the rosin resins include rosin resins typified by natural rosins, polymerized rosins, modified rosins, and esterified compounds thereof, and hydrogenated products thereof.

Examples of the petroleum resins include C5 resins, C9 resins, C5/C9 resins, dicyclopentadiene (DCPD) resins, C9/DCPD resins, and hydrogenated products of these resins. DCPD resins, hydrogenated DCPD resins, C9/DCPD resins, and C9/hydrogenated DCPD resins are preferred among these.

The terpene resins refer to polymers containing terpene as structural units. Examples include polyterpene resins produced by polymerizing terpene compounds and aromatic modified terpene resins produced by polymerizing terpene

compounds and aromatic compounds. Examples of usable aromatic modified terpene resins include terpene-phenol resins made from the terpene compounds and phenolic compounds, terpene-styrene resins made from the terpene compounds and styrene compounds, and terpene-phenol-styrene resins made from the terpene compounds, phenolic compounds, and styrene compounds. Examples of the terpene compounds include α-pinene and β-pinene. Examples of the phenolic compounds include phenol and bisphenol A. Examples of the aromatic compounds include styrene compounds such as styrene and α-methylstyrene. Aromatic modified terpene resins are preferred among these.

The acrylic resins refer to polymers containing acrylic monomers as structural units. Examples include styrene acrylic resins such as those which contain carboxyl groups and are produced by copolymerization of aromatic vinyl monomer components and acrylic monomer components. Solvent-free, carboxyl group-containing styrene acrylic resins are suitably usable among these.

The resins may be commercially available from, for example, Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, ExxonMobil, KRATON, Nitto Chemical Co., Ltd., Nippon Shokubai Co., Ltd., ENEOS Corporation, Arakawa Chemical Industries, Ltd., Taoka Chemical Co., Ltd., and other manufacturers.

Desirable plasticizers in view of sustainability are plant-derived plasticizers such as the plant-derived oils and farnesene polymers.

The term "farnesene polymer" refers to a polymer that is produced by polymerizing farnesene and contains a farnesene-based structural unit. Farnesene has isomers such as α-farnesene ((3E,7E)-3,7,11-trimethyl-1,3,6,10-dodecatetraene) and β-farnesene (7,11-dimethyl-3-methylene-1,6,10-dodecatriene). Preferred is (E)-β-farnesene having the following structure:

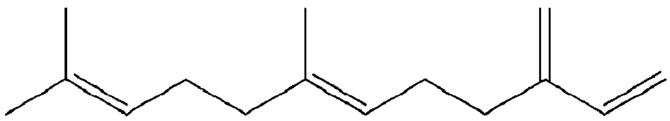

The farnesene polymers may be either homopolymers of farnesene (farnesene homopolymers) or copolymers of farnesene and vinyl monomers (farnesene-vinyl monomer copolymers). Each of these may be used alone, or two or more of these may be used in combination. Copolymers of farnesene and vinyl monomers are preferred among these.

Examples of the vinyl monomers include aromatic vinyl compounds such as styrene, 2-methylstyrene, 3-methylstyrene, 4-methylstyrene, α-methylstyrene, 2,4-dimethylstyrene, 2,4-diisopropylstyrene, 4-tert-butylstyrene, 5-t-butyl-2-methylstyrene, vinylethylbenzene, divinylbenzene, trivinylbenzene, divinylnaphthalene, tert-butoxystyrene, vinylbenzyldimethylamine, (4-vinylbenzyl)dimethylaminoethyl ether, N,N-dimethylaminoethylstyrene, N,N-dimethylaminomethylstyrene, 2-ethylstyrene, 3-ethylstyrene, 4-ethylstyrene, 2-t-butylstyrene, 3-t-butylstyrene, 4-t-butylstyrene, vinylxylene, vinylnaphthalene, vinyltoluene, vinylpyridine, diphenylethylene, and tertiary amino group-containing diphenylethylenes, and conjugated diene compounds such as butadiene and isoprene. Each of these may be used alone, or two or more of these may be used in combination. Butadiene is preferred among these. In other words, copolymers of farnesene and butadiene (farnesene-butadiene copolymers) are preferred among the farnesene-vinyl monomer copolymers.

The copolymerization ratio of farnesene and vinyl monomers (farnesene/vinyl monomers) of the farnesene-vinyl monomer copolymers is preferably 40/60 to 90/10 by mass.

Farnesene polymers having a weight average molecular weight (Mw) of 3000 or more and 300000 or less may be suitably used. The Mw of the farnesene polymers is preferably 8000 or more, more preferably 10000 or more, while it is preferably 100000 or less, more preferably 60000 or less, still more preferably 50000 or less. When the weight average molecular weight is within the range indicated above, the advantageous effects tend to be better achieved.

Farnesene polymers that are either liquid or solid under conditions of 1 atmosphere and room temperature (25°C) may be used. Of these, liquid farnesene polymers that are liquid under conditions of 1 atmosphere and room temperature (25°C) are desirable.

The amount of the plasticizer (total amount of plasticizers) per 100 parts by mass of the rubber component in the rubber composition is preferably 1 part by mass or more, more preferably 5 parts by mass or more, still more preferably 10 parts by mass or more. The upper limit is preferably 50 parts by mass or less, more preferably 30 parts by mass or less, still more preferably 25 parts by mass or less. When the amount is within the range indicated above, the advantageous effects tend to be better achieved.

The amount of the plasticizer includes the amounts of oils and resins contained in oil-extended rubbers and resin-extended rubbers, respectively.

The amount of solid plasticizers that are solid under conditions of 1 atmosphere and room temperature (25°C) per 100 parts by mass of the rubber component in the rubber composition is preferably 20 parts by mass or less, more preferably 5 parts by mass or less, still more preferably 1 part by mass or less, and may be 0 parts by mass. When the

amount is within the range indicated above, the advantageous effects tend to be better achieved.

The amount of the resins that are solid under conditions of 1 atmosphere and room temperature (25°C) per 100 parts by mass of the rubber component in the rubber composition is preferably 20 parts by mass or less, more preferably 5 parts by mass or less, still more preferably 1 part by mass or less, and may be 0 parts by mass. When the amount is within the range indicated above, the advantageous effects tend to be better achieved.

The amount of liquid plasticizers that are liquid under conditions of 1 atmosphere and room temperature (25°C) per 100 parts by mass of the rubber component in the rubber composition is preferably 1 part by mass or more, more preferably 5 parts by mass or more, still more preferably 10 parts by mass or more. The upper limit is preferably 50 parts by mass or less, more preferably 30 parts by mass or less, still more preferably 25 parts by mass or less. When the amount is within the range indicated above, the advantageous effects tend to be better achieved.

The amount of the liquid plasticizers includes the amount of oils in oil-extended rubbers and the amount of liquid resins in resin-extended rubbers extended with liquid resins.

The amount of oils per 100 parts by mass of the rubber component in the rubber composition is preferably 1 part by mass or more, more preferably 5 parts by mass or more, still more preferably 10 parts by mass or more. The upper limit is preferably 50 parts by mass or less, more preferably 30 parts by mass or less, still more preferably 25 parts by mass or less. When the amount is within the range indicated above, the advantageous effects tend to be better achieved.

The amount of oils includes the amount of oils in oil-extended rubbers.

The rubber composition may further contain vulcanized rubber particles.

The term "vulcanized rubber particles" refers to particles made of vulcanized rubber. Examples of usable vulcanized rubber particles include rubber powder stipulated in JIS K 6316:2017. From the perspective of environmental considerations and cost, recycled rubber powder produced from pulverized waste tires or the like is preferred. Each of these may be used alone, or two or more of these may be used in combination.

The vulcanized rubber particles are not limited and may be unmodified vulcanized rubber particles or modified vulcanized rubber particles.

Usable commercial products of vulcanized rubber particles may be available from Lehigh, Muraoka Rubber Reclaiming Co., Ltd, and other manufacturers.

The amount of vulcanized rubber particles per 100 parts by mass of the rubber component in the rubber composition is preferably 5 parts by mass or more, more preferably 7 parts by mass or more, still more preferably 10 parts by mass or more, while it is preferably 30 parts by mass or less, more preferably 20 parts by mass or less, still more preferably 15 parts by mass or less. When the amount is within the range indicated above, the advantageous effects tend to be better achieved.

In view of crack resistance, ozone resistance, or the like, the rubber composition preferably contains an antioxidant.

Non-limiting examples of the antioxidant include naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine (6PPD), N,N'-bis(1,4-dimethylpentyl)-p-phenylenediamine (77PD), N,N'-diphenyl-p-phenylenediamine (DPPD), N,N'-ditolyl-p-phenylenediamine (DTPD), N-isopropyl-N'-phenyl-p-phenylenediamine (IPPD), and N,N'-di-2-naphthyl-p-phenylenediamine (DNPD); quinoline antioxidants such as polymerized 2,2,4-trimethyl-1,2-dihydroquinoline; monophenolic antioxidants such as 2,6-dit-butyl-4-methylphenol and styrenated phenol; and bis-, tris-, or polyphenolic antioxidants such as tetrakis[methylene-3-(3',5'-di-t-butyl-4'-hydroxyphenyl) propionate]methane. Preferred among these are p-phenylenediamine antioxidants and quinoline antioxidants, with N-(1,3-dimethylbutyl)-N'-phenyl-p-phenylenediamine or polymerized 2,2,4-trimethyl-1,2-dihydroquinoline being more preferred. Usable commercial products may be available from Seiko Chemical Co., Ltd., Sumitomo Chemical Co., Ltd., Ouchi Shinko Chemical Industrial Co., Ltd., Flexsys, and other manufacturers.

The amount of the antioxidant per 100 parts by mass of the rubber component in the rubber composition is preferably 0.2 parts by mass or more, more preferably 2.0 parts by mass or more, still more preferably 3.4 parts by mass or more. The amount is preferably 10.0 parts by mass or less, more preferably 6.0 parts by mass or less.

The rubber composition may contain stearic acid.

The amount of stearic acid, if present, in the rubber composition per 100 parts by mass of the rubber component is preferably 0.5 parts by mass or more, more preferably 1.5 parts by mass or more, still more preferably 2.0 parts by mass or more, while it is preferably 10 parts by mass or less, more preferably 5 parts by mass or less.

Here, conventionally known stearic acid may be used, including, for example, those available from NOF Corporation, Kao Corporation, FUJIFILM Wako Pure Chemical Corporation, Chiba Fatty Acid Co., Ltd., and other manufacturers.

The rubber composition preferably contains zinc oxide.

The amount of zinc oxide, if present, in the rubber composition per 100 parts by mass of the rubber component is preferably 0.5 parts by mass or more, more preferably 1.5 parts by mass or more, still more preferably 2.0 parts by mass or

more, further preferably 4.0 parts by mass or more, further preferably 5.0 parts by mass or more, while it is preferably 10.0 parts by mass or less, more preferably 8.0 parts by mass or less, still more preferably 6.0 parts by mass or less. When the amount is within the range indicated above, the advantageous effects tend to be better achieved. In view of the vulcanization rate, the amount per 100 parts by mass of the rubber component is preferably 5.0 parts by mass or less, more preferably 4.0 parts by mass or less, still more preferably 2.0 parts by mass or less, while it is preferably 0.1 parts by mass or more, more preferably 0.5 parts by mass or more, still more preferably 1.0 parts by mass or more.

Here, conventionally known zinc oxide may be used, including, for example, those available from Mitsui Mining & Smelting Co., Ltd., Toho Zinc Co., Ltd., HakusuiTech Co., Ltd., Seido Chemical Industry Co., Ltd., Sakai Chemical Industry Co., Ltd., and other manufacturers.

The mechanism of the enhancement of the advantageous effects when the rubber composition contains zinc oxide is not clear. Presumably, the presence of zinc oxide enables formation of reversible ionic bonds and hydrogen bonds, which can reinforce the ionic bonds and hydrogen bonds formed by the pyridine-based compound and the polycarboxylic acid compound. Presumably, the heat resistance is thus significantly improved.

The rubber composition may contain a wax.

The amount of waxes, if present, in the rubber composition per 100 parts by mass of the rubber component is preferably 0.5 parts by mass or more, more preferably 1.6 parts by mass or more, while it is preferably 8.0 parts by mass or less, more preferably 5.0 parts by mass or less.

The wax is not limited. Any wax usually used in the tire industry may be suitably used. Examples include mineral wax and plant-derived wax. Mineral wax refers to wax derived from mineral resources such as petroleum or natural gas. Plant-derived wax refers to wax derived from natural resources such as plants. Of these, mineral wax is preferred. Examples of the plant-derived wax include rice wax, carnauba wax, and candelilla wax. Examples of the mineral wax include paraffin wax and microcrystalline wax as well as selected special wax thereof. Paraffin wax is preferred. According to the present embodiments, wax does not include stearic acid. Usable commercial products of wax may be available from Ouchi Shinko Chemical Industrial Co., Ltd., Nippon Seiro Co., Ltd., Paramelt, and other manufacturers. Each wax may be used alone, or two or more of these may be used in combination.

The rubber composition may contain sulfur as a crosslinking agent in order to moderately crosslink the polymer chains to obtain good properties.

The amount of the sulfur per 100 parts by mass of the rubber component in the rubber composition is preferably 7.0 parts by mass or less, more preferably 5.0 parts by mass or less, still more preferably 4.0 parts by mass or less, further preferably 2.0 parts by mass or less, further preferably 1.0 parts by mass or less, further preferably 0.5 parts by mass or less, and may be 0 parts by mass. When the amount is within the range indicated above, the advantageous effects tend to be better achieved.

Examples of sulfur include those commonly used in the rubber industry, such as powdered sulfur, precipitated sulfur, colloidal sulfur, insoluble sulfur, highly dispersible sulfur, and soluble sulfur. Usable commercial products are available from Tsurumi Chemical Industry Co., Ltd., Karuizawa sulfur Co., Ltd., Shikoku Chemicals Corporation, Flexsys, Nippon Kanryu Industry Co., Ltd., Hosoi Chemical Industry Co., Ltd, and other manufacturers. Each of these may be used alone, or two or more of these may be used in combination.

The rubber composition may contain a vulcanization accelerator.

The amount of the vulcanization accelerator in the rubber composition is not limited and may be freely determined according to the desired vulcanization rate and crosslink density. Still, the amount per 100 parts by mass of the rubber component is preferably 8.0 parts by mass or less, more preferably 6.0 parts by mass or less, still more preferably 5.0 parts by mass or less, further preferably 4.0 parts by mass or less, further preferably 2.0 parts by mass or less, further preferably 1.0 parts by mass or less, and may be 0 parts by mass.

Any type of vulcanization accelerators may be used, including those generally used. Examples of the vulcanization accelerators include benzothiazole vulcanization accelerators such as 2-mercaptobenzothiazole, di-2-benzothiazolyl disulfide, and N-cyclohexyl-2-benzothiazylsulfenamide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazole sulfenamide, N-t-butyl-2-benzothiazolylsulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. Each of these may be used alone, or two or more of these may be used in combination. Of these, sulfenamide vulcanization accelerators, guanidine vulcanization accelerators, and benzothiazole vulcanization accelerators are preferred.

In addition to the above-described components, the rubber composition may appropriately contain agents commonly used in the tire industry such as releasing agents or other materials.

Herein, various materials containing carbon atoms (for example, rubbers, oils, resins, vulcanization accelerators, antioxidants, surfactants, or other materials) may be derived from carbon dioxide in the air. Such materials in the present invention may be obtained from carbon dioxide by directly converting carbon dioxide or by synthesizing methane from carbon dioxide through methanation and then converting the methane.

A crosslinked product of the rubber composition can be produced by kneading the components with a rubber kneading machine such as an open roll mill or a Bambury mixer and then crosslinking the kneaded product, for example.

The kneading conditions are as follows. In a base kneading step of kneading additives other than crosslinking agents (vulcanizing agents) and vulcanization accelerators, the kneading temperature is preferably 100°C or higher, more preferably 120°C or higher, while it is preferably 180°C or lower, more preferably 170°C. In a final kneading step of kneading vulcanizing agents and vulcanization accelerators, the kneading temperature is preferably 80°C or higher, while it is preferably 120°C or lower, more preferably 110°C or lower. The composition obtained after kneading is usually crosslinked (vulcanized) by press crosslinking (vulcanization), for example. The crosslinking (vulcanization) temperature is preferably 140°C or higher, more preferably 150°C or higher, while it is preferably 190°C or lower, more preferably 185°C or lower.

The rubber composition (crosslinked rubber composition) preferably has an elongation at break EB of 1000% or less, more preferably 800% or less, still more preferably 700% or less before being subjected to a heat aging test. The lower limit is preferably 300% or more, more preferably 400% or more, still more preferably 500% or more. When the EB before being subjected to a heat aging test is within the range indicated above, the advantageous effects tend to be better achieved.

The rubber composition (crosslinked rubber composition) preferably has a tensile strength at break TB of 35 MPa or less, more preferably 28 MPa or less, still more preferably 25 MPa or less before being subjected to a heat aging test. The lower limit is preferably 2 MPa or more, more preferably 8 MPa or more, still more preferably 12 MPa. When the TB before being subjected to a heat aging test is within the range indicated above, the advantageous effects tend to be better achieved.

Herein, the elongation at break EB and the tensile strength at break TB are measured by a tensile test at 23°C in accordance with JIS K 6251:2010 "Rubber, vulcanized or thermoplastics - Determination of tensile stress-strain properties", specifically, by the method described in EXAMPLES.

Here, the elongation at break EB and the tensile strength at break TB of the rubber composition (crosslinked rubber composition) can be controlled by varying the types or amounts of the chemicals (in particular, the rubber component, the pyridine-based compound represented by the formula (1), the polycarboxylic acid compound, fillers, zinc oxide) contained in the rubber composition. For example, a small amount of the pyridine-based compound tends to increase the elongation at break EB, while a large amount of the pyridine-based compound tends to increase the tensile strength at break TB.

The rubber composition can suitably be used in, for example, various tire components. Therefore, it is preferably a tire rubber composition.

Non-limiting examples of a tire component including the rubber composition include any component of tires such as treads (e.g., cap tread, base tread, undertread), sidewalls, wings, bead apexes, clinches (clinch apex), chafers (e.g., rubber chafer), innerliners, breaker toppings, and ply toppings. Of these, to better achieve the advantageous effects, the rubber composition can suitably be used in, for example, treads, sidewalls, wings, clinches, and chafers.

The tire that includes a tire component including the rubber composition is produced using the rubber composition by usual methods. Specifically, the rubber composition containing necessary additives before crosslinking or vulcanization is extruded and processed into the shape of a tire component and then molded on a tire building machine by usual methods. The resulting tire component is assembled with other tire components to produce an unvulcanized tire. Then, the unvulcanized tire is heated and pressurized in a vulcanizer, whereby a tire can be produced.

Non-limiting examples of the tire include pneumatic tires, solid tires, and airless tires. Pneumatic tires are preferred among these.

The tire can be used as a passenger car tire, a large passenger car tire, a large SUV tire, a heavy-duty car tire, such as a truck or bus tire, a light truck tire, a motorcycle tire, a racing tire, a winter tire (studless tire, snow tire, studded tire), an all-season tire, a run-flat tire, an aircraft tire, a mining vehicle tire, or other tires.

## EXAMPLES

Examples (working examples) which are considered preferable to implement the present invention are described below although the scope of the disclosure is not limited to the examples.

Chemicals used in the examples and the comparative example are listed below.

ENR50: ENR50 (degree of epoxidation: 50 mol%) available from Kumpulan Guthrie Berhad
Dicarboxylic acid: dodecanedioic acid available from FUJIFILM Wako Pure Chemical Corporation
Pyridine-based compound 1: 4-dimethylaminopyridine available from Tokyo Chemical Industry Co., Ltd.
Pyridine-based compound 2: 2,6-diaminopyridine available from Tokyo Chemical Industry Co., Ltd.
Carbon black: N330 ($N_2SA$: 75 $m^2/g$) available from Cabot Japan K.K.
Zinc oxide: zinc oxide #1 available from Mitsui Mining & Smelting Co., Ltd.

Stearic acid: stearic acid beads TSUBAKI available from NOF Corporation
Sulfur: HK-200-5 (5% oil-containing powdered sulfur) available from Hosoi Chemical Industry Co., Ltd.
Vulcanization accelerator: NOCCELER NS (N-tert-butyl-2-benzothiazolyl sulfenamide (TBBS)) available from Ouchi Shinko Chemical Industrial Co., Ltd.

(Examples 1 to 5)

According to the formulation in Table 1, the materials are kneaded in a 1.7 L Banbury mixer (Kobe Steel, Ltd.) at 150°C for five minutes to obtain a kneaded product. The kneaded product is press-molded with a 2 mm-thick mold at 170°C for 12 minutes to obtain a crosslinked rubber composition (sheet).

(Example 6 and Comparative Example 1)

According to the formulation in Table 1, the materials other than the sulfur and the vulcanization accelerator are kneaded in a 1.7 L Banbury mixer (Kobe Steel, Ltd.) at 150°C for five minutes to obtain a kneaded product. The sulfur and the vulcanization accelerator are added to the kneaded product, and they are kneaded using an open roll mill at 80°C for five minutes to obtain an unvulcanized rubber composition.
The unvulcanized rubber composition is press-molded with a 2 mm-thick mold at 170°C for 12 minutes to obtain a crosslinked rubber composition (sheet).

<Heat aging test>

The new (before heat aging) crosslinked rubber sheet is subjected to a heat aging test (100°C, seven days) in accordance with JIS K 6257:2010 to prepare a heat-aged crosslinked rubber sheet.
Crosslinked rubber sheets obtained from the compositions prepared according to the amounts varied as shown in Table 1 are simulated. Table 1 shows the results calculated as described in the evaluation methods below.

<Tensile test>

No. 7 dumbbell-shaped specimens are prepared from the crosslinked rubber sheet before heat aging and the crosslinked rubber sheet after heat aging. The specimens are subjected to a tensile test at 23°C in accordance with JIS K 6251:2010 "Rubber, vulcanized or thermoplastics - Determination of tensile stress-strain properties" to measure the elongation at break EB (%) at 23°C and the tensile strength at break TB (MPa) at 23°C.

(Tensile test conditions)

Ambient temperature: 23°C
Test device: trade name "Strograph", Toyo Seiki Seisaku-sho, Ltd.
Tensile rate: 200 mm/min

An EB change rate and a TB change rate in each formulation are calculated using the following expressions.

$$(\text{EB change rate}) = (\text{EB after heat aging})/(\text{EB before heat aging}) \times 100$$

$$(\text{TB change rate}) = (\text{TB after heat aging})/(\text{TB before heat aging}) \times 100$$

The EB change rate and the TB change rate in each formulation calculated above are expressed as indices relative to the EB change rate and the TB change rate, respectively, in Comparative Example 1 each taken as 100.

$$(\text{Heat resistance index EB}) = (\text{EB change rate of each formulation})/(\text{EB change rate of Comparative Example 1}) \times 100$$

$$(\text{Heat resistance index TB}) = (\text{TB change rate of each formulation})/(\text{TB change rate of Comparative Example 1}) \times 100$$

Next, the sum of the heat resistance index EB and the heat resistance index TB is determined as a heat resistance index. A higher heat resistance index indicates better heat resistance.

[Table 1]

| | | Example 1 | Example 2 | Example 3 | Example 4 | Example 5 | Example 6 | Comparative Example 1 |
|---|---|---|---|---|---|---|---|---|
| Formulation (parts by mass) | ENR50 | 100 | 100 | 100 | 100 | 100 | 100 | 100 |
| | Dicarboxylic acid | 1.0 | 1.0 | 1.0 | 2.0 | 1.0 | 1.0 | 0 |
| | Pyridine-based compound 1 | 0.5 | 0.5 | 0 | 1.0 | 0.5 | 0.5 | 0 |
| | Pyridine-based compound 2 | 0 | 0 | 0.5 | 0 | 0 | 0 | 0 |
| | Carbon black | 0 | 40 | 40 | 40 | 40 | 40 | 40 |
| | Zinc oxide | 0 | 0 | 0 | 0 | 5.0 | 5.0 | 5.0 |
| | Stearic acid | 0 | 0 | 0 | 0 | 0 | 2.0 | 2.0 |
| | Sulfur | 0 | 0 | 0 | 0 | 0 | 1.4 | 1.4 |
| | Vulcanization accelerator | 0 | 0 | 0 | 0 | 0 | 1.4 | 1.4 |
| Evaluation | Heat resistance index EB | 517 | 465 | 407 | 385 | 753 | 132 | 100 |
| | Heat resistance index TB | 190 | 170 | 237 | 156 | 115 | 108 | 100 |
| | Heat resistance index | 707 | 635 | 644 | 541 | 868 | 240 | 200 |

## Claims

1. A rubber composition comprising:

   a rubber component including an epoxidized diene-based rubber,
   a pyridine-based compound represented by the following formula (1), and
   a polycarboxylic acid compound:

   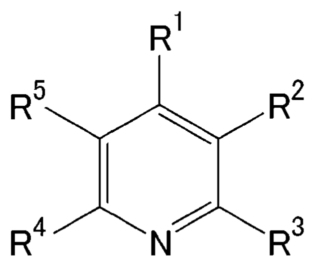

   (1)

   wherein $R^1$ to $R^5$ bound to a pyridine ring are the same as or different from each other and each represent a hydrogen atom or a monovalent organic group, and $R^1$ to $R^5$ may bind to each other and may form a ring structure.

2. The rubber composition according to claim 1, further comprising a filler,
   wherein the rubber composition contains the filler in an amount of 50 parts by mass or more per 100 parts by mass of the rubber component.

3. The rubber composition according to claim 1 or 2,
   further comprising carbon black.

4. The rubber composition according to any one of claims 1 to 3,
   wherein the epoxidized diene-based rubber is an epoxidized isoprene-based rubber.

5. The rubber composition according to any one of claims 1 to 4, further comprising zinc oxide.

**6.** The rubber composition according to any one of claims 1 to 5, wherein at least one of $R^1$ to $R^5$ bound to a pyridine ring in the formula (1) is an amino group.

**7.** The rubber composition according to any one of claims 1 to 6, wherein the amount of the polycarboxylic acid compound per 100 parts by mass of the rubber component in the rubber composition is 0.5 parts by mass or more and 3.0 parts by mass or less.

**8.** The rubber composition according to any one of claims 1 to 7, wherein the amount of carbon black in the rubber composition per 100 parts by mass of the rubber component is 25 parts by mass or more and 80 parts by mass or less.

**9.** The rubber composition according to any one of claims 1 to 8, wherein the amount of the epoxidized diene-based rubber based on 100% by mass of the rubber component in the rubber composition is 70% by mass or more.

**10.** The rubber composition according to any one of claims 1 to 9, further comprising sulfur.

**11.** The rubber composition according to any one of claims 1 to 10, wherein the polycarboxylic acid compound is a compound represented the following formula (I):

HOOC-A-COOH (I)

wherein A represents an optionally substituted divalent C1-C10 hydrocarbon group.

**12.** The rubber composition according to any one of claims 1 to 11, wherein the polycarboxylic acid compound is a compound selected from the group consisting of maleic acid, fumaric acid, phthalic acid, malic acid, tartaric acid, suberic acid, citric acid, pyromellitic acid and mellitic acid.

**13.** The rubber composition according to any one of claims 1 to 12, further comprising zinc oxide.

**14.** A tire, comprising a tire component including the rubber composition according to any one of claims 1 to 13.

Europäisches Patentamt
European Patent Office
Office européen des brevets

# EUROPEAN SEARCH REPORT

Application Number
EP 25 20 3725

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 116 355 137 A (UNIV SICHUAN) 30 June 2023 (2023-06-30) * claims 5-6 * ----- | 1-14 | INV. C08L15/00 B60C1/00 C08K3/04 C08K3/06 C08K5/09 C08K5/092 C08K5/47 |
| A | EP 1 577 341 B1 (SUMITOMO RUBBER IND [JP]) 13 December 2006 (2006-12-13) * example 7 * ----- | 1-14 | |

TECHNICAL FIELDS SEARCHED (IPC)
C08L
C08K
C08C
B60C

The present search report has been drawn up for all claims

1

| Place of search | Date of completion of the search | Examiner |
|---|---|---|
| Munich | 26 March 2026 | Ritter, Nicola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 25 20 3725

This annex lists the patent family members relating to the patent documents cited in the above-mentioned European search report. The members are as contained in the European Patent Office EDP file on
The European Patent Office is in no way liable for these particulars which are merely given for the purpose of information.

26-03-2026

| Patent document cited in search report | Publication date | Patent family member(s) | Publication date |
|---|---|---|---|
| CN 116355137 A | 30-06-2023 | NONE | |
| EP 1577341 B1 | 13-12-2006 | CN 1670062 A | 21-09-2005 |
| | | DE 602005000321 T2 | 31-05-2007 |
| | | EP 1577341 A1 | 21-09-2005 |
| | | US 2005209390 A1 | 22-09-2005 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2019065240 A
- JP H0426617 B
- JP H02110182 A
- GB 2113692 B
- JP 2009002594 A


### Non-patent literature cited in the description


- Chemistry Handbook. Maruzen Co., Ltd., 380
- *Akita Prefectural University Web Journal B*, 2019, vol. 6, 216-222